# FASCICULE DE BREVET EUROPEEN

(11) **EP 0 974 252 B1**
(45) Date de publication et mention de la délivrance du brevet: **18.12.2002**
(21) Numéro de dépôt: 99440187.5
(22) Date de dépôt: 09.07.1999
(51) Int. Cl.: A01C 7/20

(54) **Semoir**
Sämaschine
Seeddrill

(30) Priorité: 20.07.1998 FR 9809337
(43) Date de publication de la demande: 26.01.2000
(73) Titulaire: Kuhn-Nodet S.A., 77876 Montereau (FR)
(72) Inventeur: Constant, Olivier, 77130 Misy sur Yonne (FR)
(74) Mandataire: Andres, Jean-Claude

(56) Documents cités:
- EP-A- 0 728 407
- DE-A- 3 706 383
- DE-A- 3 706 384
- DE-U- 8 712 509

## Description

La présente invention concerne un semoir comportant
- un châssis ;
- une trémie destinée à contenir la semence ;
- des éléments d'implantation de la semence dans le sol contenant :
   * des socs disposés suivant au moins deux rangées sensiblement orthogonales à la direction d'avance ;
   * des bras de liaison longs supportant chacun un soc appartenant à l'une desdites rangées ; et
   * des bras de liaison courts supportant chacun un soc appartenant à l'autre rangée ;
   et
- une butée commune limitant le déplacement de l'ensemble des socs vers le bas.

Il est connu dans l'état de la technique un tel semoir comportant dans les grandes lignes, un châssis, une trémie destinée à contenir la semence et des éléments d'implantation de la semence dans le sol.

Ces éléments d'implantation comportent des socs disposés suivant deux rangées sensiblement orthogonales à la direction d'avance et des bras de liaison longs supportant chacun un soc appartenant à la deuxième rangée et des bras de liaison courts supportant chacun un soc appartenant à la première rangée, ladite première rangée étant située devant ladite deuxième rangée.

Ce semoir connu comporte en sus une butée commune limitant le déplacement de l'ensemble des socs vers le bas de manière à éviter qu'ils ne pénètrent trop profondément dans le sol, ce qui entraînerait une implantation trop profonde de la semence dans le sol, notamment lorsque ledit sol est meuble. A cet effet, la butée commune comporte une barre horizontale qui s'étend sous l'ensemble des bras de liaison. Chaque bras de liaison est destiné à venir en appui sur la barre horizontale dans sa position la plus basse ce qui limite donc la profondeur de semis.

Ce semoir présente cependant un inconvénient majeur. En effet, la barre horizontale est fixée au châssis du semoir et ne peut pas être amenée dans une autre position ce qui limite donc la profondeur de semis maximum à une valeur unique. Avec un tel semoir la semence risque d'être implantée dans le sol à des profondeurs irrégulières ce qui ne favorise pas une bonne levée de ladite semence.

Le but de la présente invention est de remédier notamment à cet inconvénient sus-cité tout en assurant un bon fonctionnement du semoir et à un moindre coût et tout en assurant un réglage rapide et facile de la profondeur de travail maximum des socs.

A cet effet, le semoir selon l'invention est caractérisé en ce qu'il est prévu un moyen de réglage commun agissant sur l'ensemble des éléments d'implantation de manière à limiter le débattement de l'ensemble des socs vers le bas de la même valeur lors d'un tel réglage.

L'invention concerne également les caractéristiques suivantes considérées isolément ou dans toutes leurs combinaisons techniquement possibles :
- le moyen de réglage commun comporte une barre qui s'étend sur toute la largeur du semoir sous les bras de liaison longs et sous les bras de liaison courts, ladite barre pouvant être déplacée en hauteur à l'aide d'un dispositif de réglage, ce qui permet avantageusement de varier la profondeur de travail maximum des socs ;
- le moyen de réglage commun comporte au moins une came permettant de limiter le débattement des socs vers le bas de la même valeur ce qui permet avantageusement de régler rapidement et facilement la profondeur de travail maximum desdits socs ;
- au moins un bras de liaison comporte une came destinée à s'appuyer sur la barre du moyen de réglage commun, ce qui permet avantageusement d'agir sur ledit bras de liaison d'une manière différente par rapport aux autres bras de liaison ;
- chaque bras de liaison court comporte une partie de forme arrondie dirigée vers le haut, ladite partie de forme arrondie formant la came ;
- chaque bras de liaison long comporte une partie droite laquelle est destinée à s'appuyer sur la barre du moyen de réglage commun ;
- chaque bras de liaison long est lié au châssis au moyen d'une première articulation respective et chaque bras de liaison court est lié au châssis au moyen d'une deuxième articulation respective, chaque articulation permettant aux bras de liaison correspondant un débattement vers le haut et vers le bas, ce qui permet avantageusement aux socs de suivre les dénivellations du sol ;
- chaque première articulation liant un bras de liaison long au châssis comporte un axe longitudinal sensiblement horizontal et orthogonal à la direction d'avance et est située devant la barre et quelque peu plus haut que celle-ci ;
- chaque deuxième articulation liant un bras de liaison court au châssis comporte un axe longitudinal sensiblement horizontal et orthogonal à la direction d'avance et est située, selon une vue latérale, plus près de la barre que la première articulation ;
- la deuxième articulation est située plus bas que la première articulation.

D'autres objets et caractéristiques de l'invention ressortiront de la description ci-après avec référence aux dessins annexés qui représentent, à titre d'exemple non limitatif, une forme de réalisation du semoir selon l'invention.

Sur ces dessins :
- la figure 1 représente une vue de côté d'un semoir selon l'invention, sur laquelle ont été effectuées quelques coupes partielles ;
- la figure 2 représente, à une autre échelle, une partie du semoir de la figure 1 selon une vue de côté, sur laquelle ont été effectuées quelques coupes partielles ;
- la figure 3 représente, à une autre échelle, une partie du semoir de la figure 1 dans une autre position selon une même vue de côté, sur laquelle ont été effectuées quelques coupes partielles ;
- la figure 4 représente un agrandissement partiel du semoir représenté sur la figure 2.

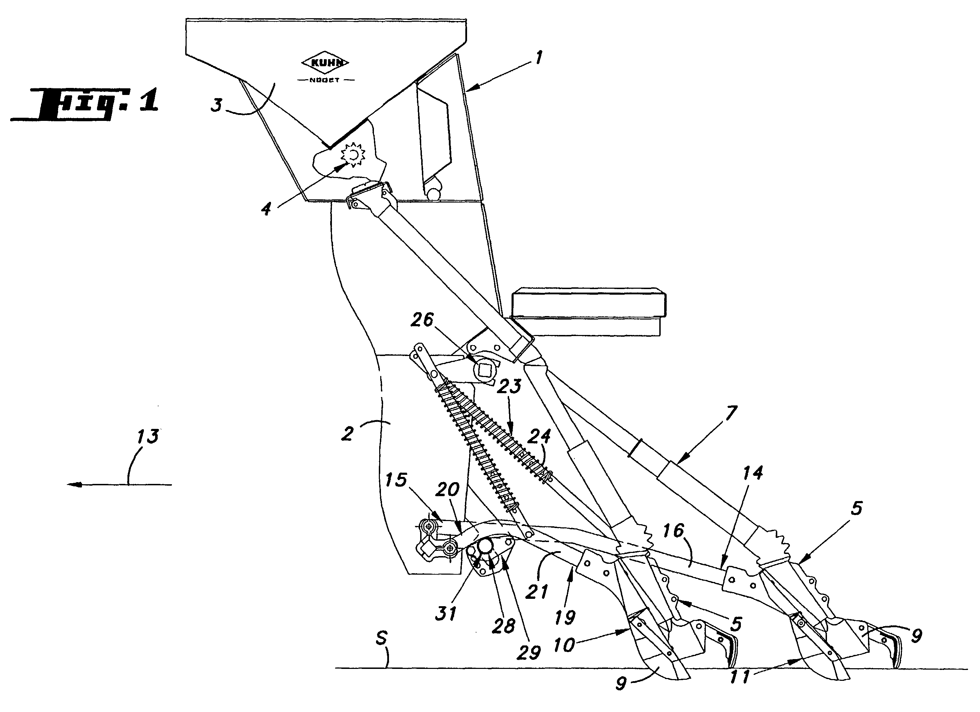

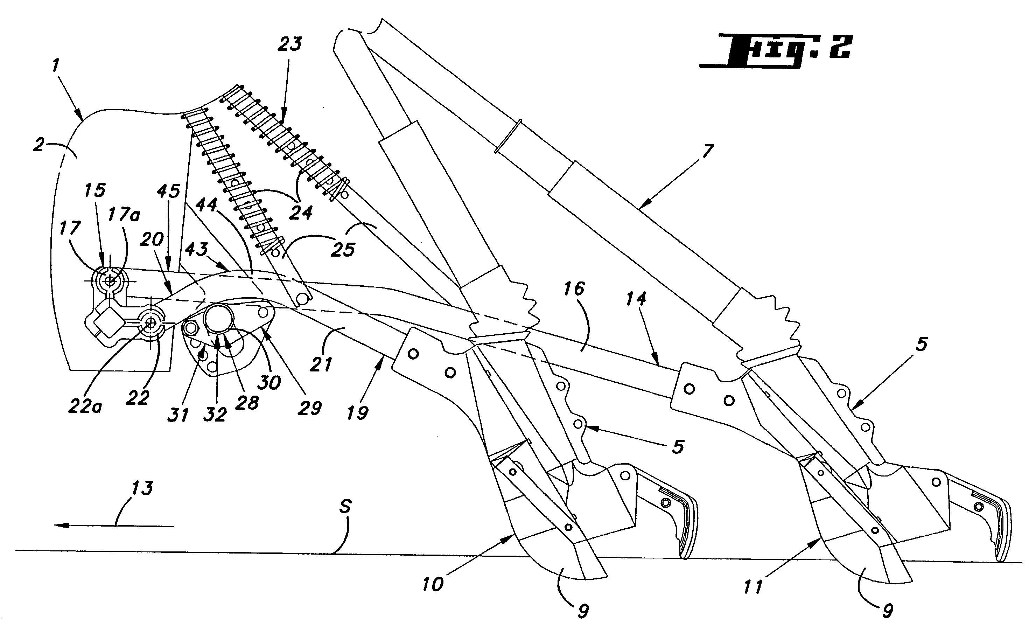

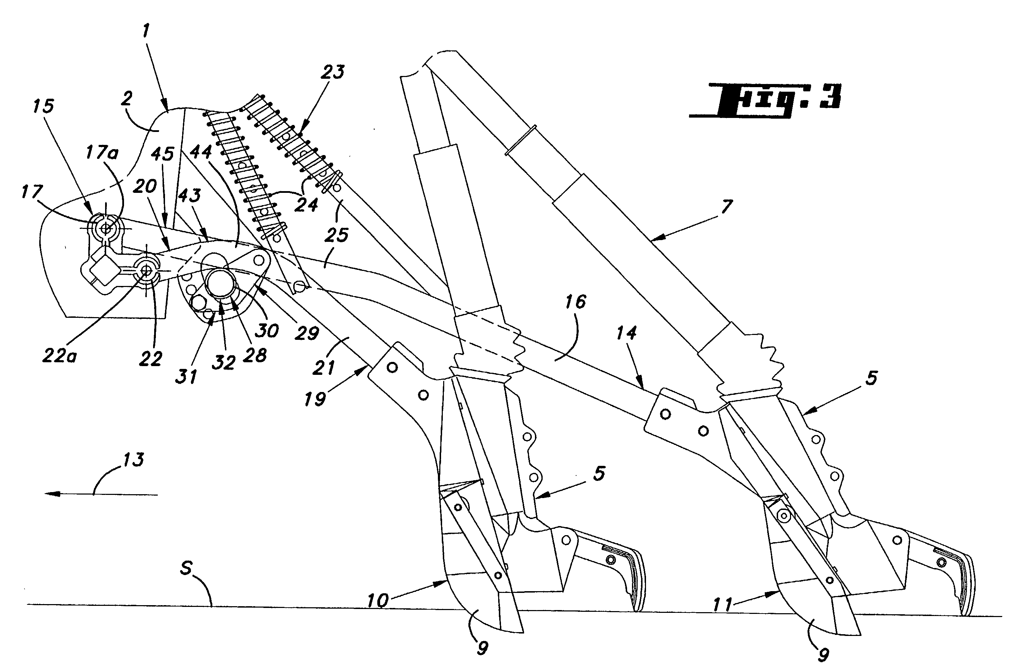

A la lumière des figures 1 à 3, on voit un semoir (1) selon la présente invention. Ce semoir (1) est destiné à être attelé à un véhicule moteur (non représenté) ou à une machine de travail du sol (non représentée).

Ce semoir (1) comporte, dans les grandes lignes, un châssis (2), une trémie (3) fixée audit châssis (2) et destinée à contenir la semence à implanter dans le sol (S), un dispositif de dosage (4) situé sous ladite trémie (3) et destiné à doser la semence, des éléments d'implantation (5) destinés à implanter la semence dans le sol (S) et un dispositif d'acheminement (7) destiné à acheminer la semence dudit dispositif de dosage (4) vers lesdits éléments d'implantation (5).

Les éléments d'implantation (5) de la semence dans le sol (S) comportent des socs (9) disposés, selon l'exemple de réalisation représenté, suivant deux rangées (10, 11) sensiblement orthogonales à la direction d'avance (13). Chaque rangée (10, 11) comporte une pluralité de socs (9) situés l'un à côté de l'autre de manière à former la rangée (10, 11) correspondante. On notera encore que la première rangée (10) est située devant la deuxième rangée (11).

Chaque soc (9) appartenant à la deuxième rangée (11) est fixé à l'une (14) des extrémités (14, 15) d'un bras de liaison long (16) correspondant. Ce bras de liaison long (16) est lié à son autre extrémité (15) au châssis (2) au moyen d'une première articulation (17) d'axe longitudinal (17a) sensiblement horizontal et orthogonal à la direction d'avance (13). Selon l'exemple de réalisation représenté, ce bras de liaison long (16) est tubulaire et de section transversale circulaire. Il s'étend, à partir de la première articulation (17), vers l'arrière du semoir (1) dans le sens opposé à la direction d'avance (13) sensiblement parallèlement à cette dernière, et sensiblement horizontalement.

A la lumière des différentes figures, on voit en sus que chaque soc (9) appartenant à la première rangée (10) est fixé à l'une (19) des extrémités (19, 20) d'un bras de liaison court (21) correspondant. Ce bras de liaison court (21) est lié à son autre extrémité (20) au châssis (2) au moyen d'une deuxième articulation (22) d'axe longitudinal (22a) sensiblement horizontal et orthogonal à la direction d'avance (13). Selon l'exemple de réalisation représenté, ce bras de liaison court (21) est également tubulaire et de section transversale circulaire. Il s'étend, à partir de la deuxième articulation (22), vers l'arrière du semoir (1) et sensiblement parallèlement à la direction d'avance (13).

La première articulation (17) permet au bras de liaison long (16) un débattement vers le haut et vers le bas et la deuxième articulation (22) permet au bras de liaison court (21) également un débattement vers le haut et vers le bas. De telles articulations (17, 22) permettent donc avantageusement aux socs (9) de suivre les dénivellations du sol (S) ce qui permet d'implanter les graines dans le sol (S) à une profondeur sensiblement constante.

Pour assurer une bonne pénétration des socs (9) dans le sol (S), il est prévu un dispositif de terrage (23) permettant d'exercer une force vers le bas sur les éléments d'implantation (5) en direction dudit sol (S).

A cet effet, le dispositif de terrage (23) comporte des éléments élastiques (24) et des tiges (25), chaque élément élastique (24) avec la tige (25) correspondante exerçant une force sur un bras de liaison (16, 21) correspondant en direction du sol (S). L'intensité de la force développée par les éléments élastiques (24) peut d'une part être réglée individuellement en agissant sur l'élément élastique (24) correspondant ou d'autre part être réglée au moyen d'un dispositif de réglage du terrage centralisé (26).

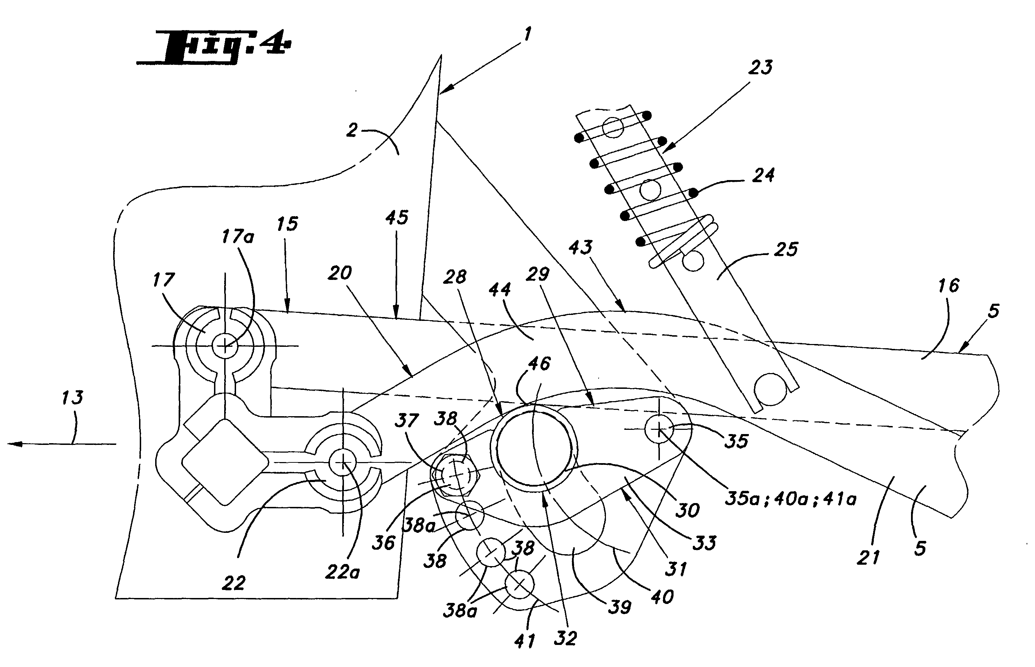

Pour éviter que les socs (9) ne pénètrent trop profondément dans le sol (S) et déposent la semence trop profondément dans ce dernier, il est prévu une butée commune (28) limitant le déplacement de l'ensemble des socs (9) vers le bas, et un moyen de réglage commun (29) agissant sur l'ensemble des éléments d'implantation (5) de manière à limiter le débattement de l'ensemble des socs (9) vers le bas de la même valeur lors du réglage. A cet effet, le moyen de réglage commun (29) comporte une barre (30) qui s'étend sur toute la largeur du semoir (1), sous les bras de liaison longs (16) et sous les bras de liaison courts (21). Cette barre (30) fait office de butée commune (28). A cet effet, les bras de liaison (16, 21) sont destinés à s'appuyer sur ladite barre (30) ce qui limite leur pivotement vers le bas. On notera encore que cette barre (30) peut être déplacée en hauteur à l'aide d'un dispositif de réglage (31) ce qui permet avantageusement de varier rapidement la profondeur de travail maximum de l'ensemble des socs (9). A cet effet, le dispositif de réglage (31) comporte selon l'exemple de réalisation représenté, à chaque extrémité latérale (32) de la barre (30), une bielle (33) fixée à ladite barre (30). Cette bielle (33) est liée au châssis (2) d'une part au moyen d'une troisième articulation (35) d'axe longitudinal (35a) au moins sensiblement parallèle aux axes longitudinaux (17a, 22a) des premières et deuxièmes articulations (17, 22) et d'autre part au moyen d'un boulon (36). Ce boulon (36) s'étant d'une part au travers d'un premier trou (37) prévu dans la bielle (33) et d'autre part au travers d'un deuxième trou (38) prévu dans le châssis (2). Chaque extrémité latérale (32) de la barre (30) s'étend dans un trou oblong (39) prévu dans le châssis (2). Ce trou oblong (39) est en forme d'un arc de cercle (40) dont le centre (40a) est confondu avec l'axe longitudinal (35a) de la troisième articulation (35) suivant une vue de côté telle que représentée sur la figure 4.

A la lumière de la figure 4, on voit en sus qu'il est prévu une pluralité de deuxièmes trous (38) dans le châssis (2) situés l'un à côté de l'autre. Chaque deuxième trou (38) comporte un axe longitudinal (38a) s'étendant au moins sensiblement parallèlement à l'axe longitudinal (38a) du deuxième trou (38) voisin. On notera encore que l'ensemble des deuxièmes trous (38) est disposé suivant un autre arc de cercle (41) de centre (41a) confondu avec le centre (40a) de l'arc de cercle (40)

Pour déplacer la barre (30) en hauteur il suffit à l'opérateur de retirer les boulons (36) des trous (37, 38) correspondants et de pivoter la barre (30) avec les bielles (33) autour des axes longitudinaux (35a) confondus des troisièmes articulations (35) jusqu'à ce que chaque premier trou (37) s'étende en face d'un autre deuxième trou (38) correspondant. Une fois les trous (37, 38) correspondant en face l'un de l'autre, l'opérateur peut engager lesdits boulons (36) dans ces derniers pour fixer la barre (30) au châssis (2) dans cette nouvelle position.

A la lumière des différentes figures, on voit encore que le moyen de réglage commun (29) comporte au moins une came (43) permettant de limiter rapidement et facilement le débattement de l'ensemble des socs (9) vers le bas de la même valeur. Plus précisément, on voit à la lumière des différentes figures qu'au moins un des bras de liaison (16, 21) comporte une came (43) destinée à s'appuyer sur la barre (30) du moyen de réglage commun (29). Selon l'exemple de réalisation représenté, on remarquera à la lumière des différentes figures que chaque bras de liaison court (21) comporte une partie de forme arrondie (44) formant la came (43).

Cette forme arrondie (44) prend son origine au niveau de la deuxième articulation (22) à partir de laquelle elle s'étend vers l'arrière et vers le haut dans la direction opposée à la direction d'avance (13) et en s'éloignant du sol lorsque la barre (30) s'étend dans sa position la plus haute telle que représentée sur les figures 1, 2 et 4.

Selon l'exemple de réalisation représenté, on remarquera encore à la lumière des différentes figures, que chaque bras de liaison long (16) comporte une partie droite (45) qui prend son origine au niveau de la première articulation (17) à partir de laquelle elle s'étend sensiblement parallèlement au sol (S) vers l'arrière dans la direction opposée à la direction d'avance (13) lorsque la barre (30) s'étend dans sa position la plus haute telle que représentée sur les figures 1, 2 et 4.

Lorsque les bras de liaison longs (16) et les bras de liaison courts (21) s'étendent dans leur position la plus basse autorisée par la barre (30), chaque bras de liaison long (16) repose sur ladite barre (30) au moyen de sa partie droite (45) correspondante et chaque bras de liaison court (21) repose sur ladite barre (30) au moyen de sa partie de forme arrondie (44).

On notera encore que, selon une vue de côté, telle que représentée par la figure 4, que les bras de liaison longs (16) et les bras de liaison courts (21) reposent sur la barre (30) sur sensiblement une même ligne (46) située sur la moitié supérieure de ladite barre (30).

A la lumière des différentes figures, on voit encore que chaque première articulation (17) liant le bras de liaison long (16) correspondant au châssis (2) est située à une certaine distance de la barre (30) et devant cette dernière compte tenu de la direction d'avance (13) et quelque peu plus haut que celle-ci. La deuxième articulation (22) liant le bras de liaison court (21) correspondant au châssis (2) est située, quant à elle, plus près de la barre (30) que la première articulation (17). Plus précisément la deuxième articulation (22) est située plus bas que la première articulation (17) et, selon une vue de dessus, entre la barre (30) et ladite première articulation (17).

La partie de forme arrondie (44) du bras de liaison court (21), la partie droite (45) du bras de liaison long (16), la trajectoire de la barre (30), lorsque celle-ci est pivotée autour de l'axe longitudinal (35a) de la troisième articulation (35), et l'implantation de la première articulation (17) et de la deuxième articulation (22) sont agencées de telle sorte que lorsque l'opérateur agit sur un dispositif de réglage (31) pour changer la profondeur de travail maximum des socs (9), le débattement de la totalité desdits socs (9) est changé de la même valeur.

Finalement, diverses modifications peuvent être apportées à l'exemple qui vient d'être décrit, notamment en ce qui concerne la constitution des divers éléments ou par substitution d'équivalents techniques, sans pour autant sortir du domaine de protection défini dans les revendications ci-après.

C'est ainsi qu'il est par exemple parfaitement possible que le dispositif de réglage (31) soit remplacé par un dispositif de réglage centralisé du même type que celui décrit précédemment.

## Revendications

1. Semoir comportant :
- un châssis (2) ;
- une trémie (3) destinée à contenir la semence ;
- des éléments d'implantation (5) de la semence dans le sol (S) contenant :
* des socs (9) disposés suivant au moins deux rangées (10, 11) sensiblement orthogonales à la direction d'avance (13);
* des bras de liaison longs (16) supportant chacun un soc (9) appartenant à l'une (11) desdites rangées (10, 11); et
* des bras de liaison courts (21) supportant chacun un soc (9) appartenant à l'autre rangée (10);
et
- une butée commune (28) limitant le déplacement de l'ensemble des socs (9) vers le bas,
***caractérisé en ce* qu'**il est prévu un moyen de réglage commun (29) agissant sur l'ensemble des éléments d'implantation (5) de manière à limiter le débattement de l'ensemble des socs (9) vers le bas de la même valeur lors d'un tel réglage.

2. Semoir selon la revendication 1, ***caractérisé en ce* que** le moyen de réglage commun (29) comporte une barre (30) qui s'étend sur toute la largeur du semoir sous les bras de liaison longs (16) et sous les bras de liaison courts (21), ladite barre (30) pouvant être déplacée en hauteur à l'aide d'un dispositif de réglage (31).

3. Semoir selon la revendication 1 ou 2, ***caractérisé en ce* que** le moyen de réglage commun (29) comporte au moins une came (43) permettant de limiter le débattement des socs (9) vers le bas de la même valeur.

4. Semoir selon les revendications 2 et 3, ***caractérisé en ce* que** au moins un bras de liaison (16, 21) comporte une came (43) destinée à s'appuyer sur la barre (30) du moyen de réglage commun (29).

5. Semoir selon la revendication 3 ou 4, ***caractérisé en ce* que** chaque bras de liaison court (21) comporte une partie de forme arrondie (44) dirigée vers le haut, ladite partie de forme arrondie (44) formant la came (43).

6. Semoir selon la revendication 2 et l'une quelconque des revendications 3 à 5, ***caractérisé en ce* que** chaque bras de liaison long (16) comporte une partie droite (45) laquelle est destinée à s'appuyer sur la barre (30) du moyen de réglage commun (29).

7. Semoir selon l'une quelconque des revendications 1 à 6, ***caractérisé en ce* que** chaque bras de liaison long (16) est lié au châssis (2) au moyen d'une première articulation (17) respective et que chaque bras de liaison court (21) est lié au châssis (2) au moyen d'une deuxième articulation (22) respective, chaque articulation (17, 22) permettant aux bras de liaison (16, 21) correspondant un débattement vers le haut et vers le bas.

8. Semoir selon la revendication 2 et 7, ***caractérisé en ce* que** chaque première articulation (17) liant un bras de liaison long (16) au châssis (2) comporte un axe longitudinal (17a) sensiblement horizontal et orthogonal à la direction d'avance (13) et est située devant la barre (30) et quelque peu plus haut que celle-ci.

9. Semoir selon la revendication 2 et la revendication 7 ou 8, ***caractérisé en ce* que** chaque deuxième articulation (22) liant un bras de liaison court (21) au châssis (2) comporte un axe longitudinal (22a) sensiblement horizontal et orthogonal à la direction d'avance (13) et est située, selon une vue latérale, plus près de la barre (30) que la première articulation (17).

10. Semoir selon l'une quelconque des revendications 7 à 9, ***caractérisé en ce* que** la deuxième articulation (22) est située plus bas que la première articulation (17).

## Claims

1. Seed drill comprising:
- a chassis (2);
- a hopper (3) intended to contain the seed;
- elements (5) for planting the seed in the ground (S) comprising:
* coulters (9) arranged in at least two rows (10, 11) substantially orthogonal to the direction of forward travel (13);
* long connecting arms (16) each supporting a coulter (9) belonging to one (11) of the said rows (10, 11); and
* short connecting arms (21) each supporting a coulter (9) belonging to the other row (10);
and
- a common stop (28) limiting the downwards movement of all the coulters (9),
***characterized in* that** there is a common adjusting means (29) acting on all the planting elements (5) so as to limit the downward travel of all the coulters (9) by the same amount during such an adjustment.

2. Seed drill according to Claim 1, ***characterized in* that** the common adjusting means (29) comprises a bar (30) which extends across the entire width of the seed drill under the long connecting arms (16) and under the short connecting arms (21), it being possible for the said bar (30) to be moved heightwise using an adjusting device (31).

3. Seed drill according to Claim 1 or 2, ***characterized in* that** the common adjusting means (29) comprises at least one cam (43) allowing the downwards travel of the coulters (9) to be limited by the same amount.

4. Seed drill according to Claims 2 and 3, ***characterized in* that** at least one connecting arm (16, 21) comprises a cam (43) intended to bear against the bar (30) of the common adjusting means (29).

5. Seed drill according to Claim 3 or 4, ***characterized in* that** each short connecting arm (21) has a part of rounded shape (44) facing upwards, the said part of rounded shape (44) forming the cam (43).

6. Seed drill according to Claim 2 and any one of Claims 3 to 5, ***characterized in* that** each long connecting arm (16) comprises a straight part (45) which is intended to bear against the bar (30) of the common adjusting means (29).

7. Seed drill according to any one of Claims 1 to *6,* ***characterized in* that** each long connecting arm (16) is connected to the chassis (2) by means of a respective first articulation (17) and **in that** each short connecting arm (21) is connected to the chassis (2) by means of a respective second articulation (22), each articulation (17, 22) allowing the corresponding connecting arms (16, 21) upwards and downwards travel.

8. Seed drill according to Claims 2 and 7, ***characterized in* that** each first articulation (17) linking a long connecting arm (16) to the chassis (2) has a longitudinal axis (17a) that is substantially horizontal and orthogonal to the direction of forward travel (13) and is situated before the bar (30) and somewhat higher up than the latter.

9. Seed drill according to Claim 2 and Claim 7 or 8, ***characterized in* that** each second articulation (22) linking a short connecting arm (21) to the chassis (2) has a longitudinal axis (22a) that is substantially horizontal and orthogonal to the direction of forward travel (13) and is situated, in side view, closer to the bar (30) than the first articulation (17).

10. Seed drill according to any one of Claims 7 to 9, ***characterized in* that** the second articulation (22) is situated lower down than the first articulation (17).

## Patentansprüche

1. Sämaschine, die
- einen Rahmen (2);
- einen Trichter (3) zur Lagerung von Saatgut;
- Elemente (5) zur Ablage von Saatgut in den Boden (S) mit
* Scharen (9), die in mindestens zwei im wesentlichen orthogonal zur Fahrtrichtung (13) verlaufenden Reihen (10, 11) angeordnet sind;
* lange Verbindungsarme (16), die jeweils ein zu einer (11) der Reihen (10, 11) gehörendes Schar (9) stützen; und
* kurze Verbindungsarme (21), die jeweils ein zu der anderen Reihe (10) gehörendes Schar (9) stützen;
und
- einen gemeinsamen Anschlag (28), der die Bewegung der Gesamtheit der Scharen (9) nach unten begrenzt,
umfasst,
***dadurch gekennzeichnet*, dass** ein gemeinsames Einstellmittel (29) vorgesehen ist, das auf die Gesamtheit der Ablegeelemente (5) dahingehend einwirkt, die Verschiebung der Gesamtheit der Scharen (9) nach unten um den gleichen Wert bei einer solchen Einstellung zu begrenzen.

2. Sämaschine nach Anspruch 1, ***dadurch gekennzeichnet*, dass** das gemeinsame Einstellmittel (29) eine sich unter den langen Verbindungsarmen (16) und unter den kurzen Verbindungsarmen (21) über die gesamte Breite der Sämaschine erstreckende Stange (30) enthält, welche mittels einer Einstellvorrichtung (31) in der Höhe verschoben werden kann.

3. Sämaschine nach Anspruch 1 oder 2, ***dadurch gekennzeichnet*, dass** das gemeinsame Einstellmittel (29) mindestens eine Kurve (43) enthält, die eine Begrenzung der Verschiebung der Scharen (9) nach unten um den gleichen Wert gestattet.

4. Sämaschine nach Anspruch 2 und 3, ***dadurch gekennzeichnet*, dass** mindestens ein Verbindungsarm (16, 21) eine Kurve (43) enthält, die sich mittels des gemeinsamen Einstellmittels (29) auf der Stange (30) abstützen kann.

5. Sämaschine nach Anspruch 3 oder 4, ***dadurch gekennzeichnet*, dass** jeder kurze Verbindungsarm (21) einen nach oben gerichteten Teil mit abgerundeter Form (44) aufweist, der die Kurve (43) bildet.

6. Sämaschine nach Anspruch 2 und irgend einem der Ansprüche 3 bis 5, ***dadurch gekennzeichnet*, dass** jeder lange Verbindungsarm (16) einen geraden Teil (45) aufweist, der sich mittels des gemeinsamen Einstellmittels (29) auf der Stange (30) abstützen soll.

7. Sämaschine nach irgend einem der Ansprüche 1 bis 6, ***dadurch gekennzeichnet*, dass** jeder lange Verbindungsarm (16) mittels eines jeweiligen ersten Gelenks (17) mit dem Rahmen (2) verbunden ist und dass jeder kurze Verbindungsarm (21) mittels eines jeweiligen zweiten Gelenks (22) mit dem Rahmen (2) verbunden ist, wobei jedes Gelenk (17, 22) dem entsprechenden Verbindungsarm (16, 21) eine Verschiebung nach oben und nach unten gestattet.

8. Sämaschine nach Anspruch 2 und 7, ***dadurch gekennzeichnet*, dass** jedes einen langen Verbindungsarm (16) mit dem Rahmen (2) verbindende erste Gelenk (17) eine im wesentlichen horizontal und orthogonal zur Fahrtrichtung (13) verlaufende Längsachse (17a) aufweist und sich vor der Stange (30) und etwas höher als diese befindet.

9. Sämaschine nach Anspruch 2 und Anspruch 7 oder 8, ***dadurch gekennzeichnet*, dass** jedes einen kurzen Verbindungsarm (21) mit dem Rahmen (2) verbindende zweite Gelenk (22) eine sich im wesentlichen horizontal und orthogonal zur Fahrtrichtung (13) erstreckende Längsachse (22a) aufweist und sich in Seitenansicht näher an der Stange (30) befindet als das erste Gelenk (17).

10. Sämaschine nach irgend einem der Ansprüche 7 bis 9, ***dadurch gekennzeichnet*, dass** sich das zweite Gelenk (22) tiefer befindet als das erste Gelenk (17).
